# EUROPÄISCHE PATENTSCHRIFT

(11) **EP 4 411 318 B1**
(45) Veröffentlichungstag und Bekanntmachung des Hinweises auf die Patenterteilung: **22.07.2026**
(21) Anmeldenummer: 23154636.7
(22) Anmeldetag: 02.02.2023
(51) Int. Cl.: G01B 11/30

(54) **SYSTEM UND VERFAHREN ZUM CHARAKTERISIEREN DER RAUHEIT EINER OBERFLÄCHE EINES PRÜFLINGS**
SYSTEM AND METHOD FOR CHARACTERIZING THE ROUGHNESS OF A SURFACE OF A SPECIMEN
SYSTÈME ET PROCÉDÉ DE CARACTÉRISATION DE LA RUGOSITÉ D'UNE SURFACE D'UN ÉCHANTILLON

(43) Veröffentlichungstag der Anmeldung: 07.08.2024
(73) Patentinhaber: Fraunhofer-Gesellschaft zur Förderung der angewandten Forschung e.V., 80686 München (DE)
(72) Erfinder: LAUX, Patrick, 79110 Freiburg (DE); CARL, Daniel, 79110 Freiburg (DE); BERTZ, Alexander, 79110 Freiburg (DE); FRATZ, Markus, 79110 Freiburg (DE); SCHILLER, Annelie, 79110 Freiburg (DE)
(74) Vertreter: WSL Patentanwälte Partnerschaft mbB

(56) Entgegenhaltungen:
- US-A1- 2014 049 779
- US-A1- 2018 067 327
- GOCH ET AL: "Requirements for the Application of Speckle Correlation Techniques to On-Line Inspection of Surface Roughness", CIRP ANNALS, ELSEVIER BV, NL, CH, FR, vol. 48, no. 1, 1 January 1999 (1999-01-01), pages 467 - 470, XP022137211, ISSN: 0007-8506, DOI: 10.1016/S0007-8506(07)63228-4

## Beschreibung

Die vorliegende Erfindung betrifft ein System zum Charakterisieren einer Rauheit einer Oberfläche eines Prüflings. Dazu weist ein solches System auf: eine Strahlungsquelle, wobei die Strahlungsquelle derart eingerichtet ist, dass die Strahlungsquelle in einem Betrieb des Systems eine kohärente erste elektromagnetische Strahlung mit einer ersten Wellenlänge und eine kohärente zweite elektromagnetische Strahlung mit einer zweiten Wellenlänge erzeugt und abstrahlt, und wobei die erste Wellenlänge von der zweiten Wellenlänge verschieden ist, eine Beleuchtungsoptik, wobei die Beleuchtungsoptik derart ausgestaltet und angeordnet ist, dass die Beleuchtungsoptik in dem Betrieb des Systems mit der ersten elektromagnetischen Strahlung eine Beleuchtungsfläche beleuchtet und mit der zweiten elektromagnetischen Strahlung dieselbe Beleuchtungsfläche beleuchtet und dass in dem Betrieb des Systems die Oberfläche des Prüflings in der Beleuchtungsfläche anordenbar ist, eine Erfassungsoptik, einen bilderzeugenden Detektor, wobei die Erfassungsoptik und der Detektor derart ausgestaltet und angeordnet sind, dass die Erfassungsoptik in dem Betrieb ein an der Oberfläche des Prüflings in der Beleuchtungsfläche von der ersten elektromagnetischen Strahlung erzeugtes erstes Specklemuster und ein an der Oberfläche des Prüflings in der Beleuchtungsfläche von der zweiten elektromagnetischen Strahlung erzeugtes zweites Specklemuster auf den Detektor abbildet, und eine Auswerteeinrichtung, wobei die Auswerteeinrichtung derart mit dem Detektor verbunden ist, dass die Auswerteeinrichtung in dem Betrieb des Systems ein das erste Specklemuster repräsentierendes erstes Bildsignal und ein das zweite Specklemuster repräsentierendes zweites Bildsignal von dem Detektor erhält, und wobei die Auswerteeinrichtung derart eingerichtet ist, dass die Auswerteeinrichtung in dem Betrieb des Systems ein Maß für eine Ähnlichkeit zwischen dem ersten Bildsignal und dem zweiten Bildsignal bestimmt, wobei das Maß für die Ähnlichkeit die Rauheit auf der Oberfläche charakterisiert.

Darüber hinaus betrifft die vorliegende Erfindung ein Verfahren zum Charakterisieren einer Rauheit einer Oberfläche eines Prüflings. Ein derartiges Verfahren umfasst die Schritte: Erzeugen und Abstrahlen einer kohärenten ersten elektromagnetischen Strahlung mit einer ersten Wellenlänge und einer kohärenten zweiten elektromagnetischen Strahlung mit einer zweiten Wellenlänge, wobei die erste Wellenlänge von der zweiten Wellenlänge verschieden ist, Beleuchten genau einer Beleuchtungsfläche auf der Oberfläche des Prüflings mit der ersten elektromagnetischen Strahlung und der zweiten elektromagnetischen Strahlung, Abbilden eines an der Oberfläche des Prüflings in der Beleuchtungsfläche von der ersten elektromagnetischen Strahlung erzeugten ersten Specklemusters und eines an der Oberfläche des Prüflings in der Beleuchtungsfläche von der zweiten elektromagnetischen Strahlung erzeugten zweiten Specklemusters auf einen bilderzeugenden Detektor, Erzeugen eines das erste Specklemuster repräsentierenden ersten Bildsignals und eines das zweite Specklemuster repräsentierenden zweiten Bildsignals und Bestimmen eines Maßes für eine Ähnlichkeit zwischen dem ersten Bildsignal und dem zweiten Bildsignal, wobei das Maß für die Ähnlichkeit die Rauheit der Oberfläche charakterisiert.

Die Rauheit ist ein charakteristischer Parameter aller Oberflächen, insbesondere technischer Funktionsflächen. Die Rauheit einer Oberfläche beeinflusst die Funktion, den Verschleiß und die Erscheinung eines Objekts mit dieser Oberfläche. Ist das Objekt ein Halbzeug, welches weiterbearbeitet werden muss, so kann die Rauheit der Oberfläche Auskunft über die Eignung des Halbzeugs zur weiteren Bearbeitung geben. Beispiele sind das Gleitverhalten und die Reibungseigenschaften beim Umformen von Blechen oder die Kontrolle des Haftvermögens von Beschichtungen und Lacksystemen auf der Oberfläche.

Wünschenswert ist daher ein schnelles, vollständiges und ortsaufgelöstes Prüfverfahren zum Charakterisieren der Rauheit einer Oberfläche eines Prüflings. Vollständig in diesem Sinne ist ein Prüfverfahren, welches die gesamte relevante Oberfläche erfasst. Nur dann kann in Form einer 100%-Prüfung gewährleistet werden, dass das Objekt die für die Weiterverwendung oder -bearbeitung des Objekts erforderliche Rauheit über die gesamte Oberfläche hinweg besitzt.

Aus dem Stand der Technik sind eine Reihe von Messverfahren zum Bestimmen der Rauheit einer Oberfläche bekannt. Als geeignet haben sich ein taktiles Messen, Weißlichtinterferometrie und konfokale Messverfahren herausgestellt. Beim taktilen Messen wird die Oberfläche mit einer Messspitze mechanisch abgetastet. Taktile Messverfahren zeichnen jeweils nur ein zweidimensionales Profil entlang einer Linie auf der Oberfläche des Prüflings auf. Weißlichtinterferometer und konfokale Messsysteme sind teuer und können nur in Laborumgebungen und daher nicht in der Produktionslinie eingesetzt werden.

Die genannten Messverfahren erfordern jedoch immer eine Unterbrechung des jeweiligen Produktionsprozesses und sind für Inlinemessungen nicht oder nur bedingt geeignet. Zudem muss bei diesen Verfahren die Oberfläche seriell abgerastert werden, was zeitaufwendig ist. Eine parallele Messung einer Vielzahl von Messpunkten auf der Oberfläche ist nicht möglich.

Als vielversprechend für die vollständige Charakterisierung der Rauheit einer Oberfläche eines Prüflings haben sich optische Messverfahren herausgestellt, welche auf der Auswertung eines auf der jeweiligen Oberfläche mithilfe von kohärenter elektromagnetischer Strahlung generierten Specklemusters beruhen.

Allerdings sind alle bisherigen, auf einem Specklemuster basierenden Ansätze entweder nicht ortsaufgelöst, d.h. für eine größere Oberfläche wird lediglich ein Mittelwert bereitgestellt, sie haben eine vergleichsweise kleine Messfläche oder sie erfordern ebenfalls eine serielle, langsame Abtastung der gesamten Oberfläche.

Die US 2014/0049779 A1 offenbart ein System zum Bestimmen einer Eigenschaft eines Materials. Das Material wird mit einem Lichtstrahl mit kontrollierten spektralen und Kohärenz- Eigenschaften beleuchtet. Ein Stapel von Speckle-Feldbildern wird von Speckle-Feldern aufgezeichnet, die vom beleuchteten Material in mehreren Spektralkanälen reflektiert werden. Der Stapel von Speckle-Feldbildern umfasst mehrere Speckle-Feldbilder, die jeweils in einem anderen Spektralkanal aufgezeichnet sind. Statistische Eigenschaften der Speckle-Feldbilder im Stapel von Speckle-Feldbildern werden analysiert, um mindestens eine Eigenschaft des beleuchteten Materials zu bestimmen.

Aus der Veröffentlichung von Goch et al.: "Requirements for the Application of Speckle Correlation Techniques to On-Line Inspection of Surface Roughness", CIRP ANNALS , ELSEVIER BV, Bnd. 48, Nr. 1, Seiten 467-470, 1. Januar 1999 (ISSN: 0007-8506) ist ein System zum Bestimmen der Oberflächenrauheit eines Prüflings auf Grundlage einer Korrelation von mehreren bei verschiedenen Wellenlängen erzeugten Specklemustern bekannt.

Die US 2018/0067327 A1 offenbart ein optisches Abbildungssystem und ein zugehörige Verfahren, die mit nur einer Kamera Bilder eines entfernten Objekts in unterschiedlichen Spektralbereichen erfassen.

Demgegenüber ist es Aufgabe der vorliegenden Erfindung ein System und ein Verfahren zum Charakterisieren einer Rauheit einer Oberfläche eines Prüflings bereitzustellen, welches hinreichend robust ist, um in einer Produktionsumgebung eingesetzt zu werden. Zudem ist es eine Aufgabe der vorliegenden Erfindung ein System und ein Verfahren zum Charakterisieren einer Rauheit einer Oberfläche eines Prüflings bereitzustellen, welches hinreichend schnell ist, um in einer Produktionsumgebung eingesetzt zu werden.

Zumindest eine der zuvor genannten Aufgaben wird durch ein System gemäß dem beigefügten unabhängigen Anspruch 1 gelöst. Dazu weist der Detektor des Systems eine Sensorfläche in genau einer Sensorebene auf, wobei die Erfassungsoptik derart ausgestaltet ist, dass die Erfassungsoptik das erste Specklemuster auf eine erste Teilfläche der Sensorfläche und das zweite Specklemuster auf eine zweite Teilfläche der Sensorfläche abbildet, wobei die erste und die zweite Teilfläche voneinander verschieden sind. Darüber hinaus umfasst die Erfassungsoptik ein strahlpfadteilendes Element, wobei das strahlpfadteilende Element derart ausgestaltet und angeordnet ist, dass das strahlpfadteilende Element in dem Betrieb des Systems von der Oberfläche des Prüflings in der Beleuchtungsfläche reflektierte elektromagnetische Strahlung auf einen ersten Strahlpfad zu der ersten Teilfläche und auf einen zweiten Strahlpfad zu der zweite Teilfläche aufteilt. Erfindungsgemäß ist zumindest in dem ersten Strahlpfad oder in dem zweiten Strahlpfad zumindest ein Weglängenausgleichselement angeordnet, wobei das Weglängenausgleichselement derart ausgestaltet ist, dass eine erste optische Weglänge des ersten Strahlpfads und eine zweite optische Weglänge des zweiten Strahlpfads (30) zwischen dem strahlpfadteilenden Element und der Sensorfläche gleich lang sind.

Dabei kann die Erfassungsoptik die von der Oberfläche des Prüflings reflektierte bzw. gestreute elektromagnetische Strahlung derart abbilden, dass die Sensorebene in der Fokusebene der Erfassungsoptik liegt oder vorzugsweise außerhalb. Die Abbildung kann in der Fokusebene erfolgen, vorzugsweise aber außerhalb.

Das für das Charakterisieren der Rauheit genutzte System beruht darauf, dass bei der Reflexion oder Streuung von kohärenter elektromagnetischer Strahlung an einer rauen Oberfläche durch Interferenz ein zufällig wirkendes Specklemuster aus helleren und dunkleren Flecken generiert wird. Dabei ist ein solches Specklemuster für eine vorgegebene Messgeometrie für ein und dieselbe Beleuchtungs- oder Messfläche auf einer Oberfläche des Prüflings charakteristisch. Allerdings ändert sich das zu beobachtende Specklemuster, wenn sich die Wellenlänge der elektromagnetischen Strahlung ändert. Eine solche Änderung des Specklemusters in Abhängigkeit von der Wellenlänge ist umso signifikanter je rauer die Oberfläche ist.

Mit anderen Worten ausgedrückt: Haben das erste bei einer ersten Wellenlänge aufgenommene erste Specklemuster und das zweite bei einer von der ersten Wellenlänge verschiedenen Wellenlänge aufgenommene Specklemuster eines einzigen Oberflächenabschnitts bei identischer Messgeometrie eine höhere Ähnlichkeit wenn die Oberfläche vergleichsweise glatt ist, d.h. eine geringe Rauheit aufweist, und eine geringere Ähnlichkeit wenn die Oberfläche eine größere Rauheit aufweist. Ein Maß für die Ähnlichkeit zwischen dem ersten Specklemuster bei der ersten Wellenlänge und dem zweiten Specklemuster bei der zweiten Wellenlänge charakterisiert daher die Rauheit der Oberfläche. Die gilt auch für die Ähnlichkeit zwischen einem ersten Bildsignal, welches das erste Specklemuster repräsentiert, und einem zweiten Bildsignal, welches das zweite Specklemuster repräsentiert.

Damit ein erstes Specklemuster und ein zweites Specklemuster bzw. die diese repräsentierenden ersten und zweiten Bildsignale überhaupt eine Ähnlichkeit aufweisen können, müssen die optischen Weglängen zwischen der Beleuchtungsfläche auf der Oberfläche des Prüflings und der Sensorfläche des Detektors für die erste und die zweite elektromagnetische Strahlung nahezu identisch sein.

Zum Erfüllen dieser Bedingung gibt es im Stand der Technik keine Möglichkeit, welche für Produktionsumgebungen geeignet ist. Es ist daher die grundlegende Idee der vorliegenden Erfindung, die an der Oberfläche des Prüflings innerhalb einer einzigen Beleuchtungsfläche von der ersten elektromagnetischen Strahlung und von der zweiten elektromagnetischen Strahlung erzeugten ersten und zweiten Specklemuster mit einem Detektor mit einer Sensorfläche in einer einzigen Sensorebene zu erfassen, wobei eine erste Teilfläche der Sensorfläche das erste Specklemuster erfasst und eine zweite Teilfläche der Sensorfläche das zweite Specklemuster erfasst. Die erste Teilfläche ist von der zweiten Teilfläche verschieden. Eine solche Ausgestaltung ermöglicht trotz der hohen Anforderungen an die optischen Weglängen der Strahlengänge der ersten elektromagnetischen Strahlung und der zweiten elektromagnetischen Strahlung von der Oberfläche des Prüflings in der Beleuchtungsfläche zu den ersten und zweiten Teilflächen der Sensorfläche die Realisierung eines robusten und einfach zu montierenden Systems. Dieses System lässt sich aufgrund seiner Robustheit auch in anspruchsvollen Produktionsumgebungen einsetzen. Aufgrund des einfachen optischen Aufbaus ist das System zudem preiswert herzustellen.

In einer Ausführungsform der Erfindung erzeugt die Strahlungsquelle die erste und die zweite elektromagnetisch Strahlung gleichzeitig und strahlt diese ab. Dabei wird auch die Beleuchtungsfläche gleichzeitig von der ersten und der zweiten elektromagnetischen Strahlung beleuchtet. Insbesondere durch die Möglichkeit zur gleichzeitigen Erzeugung der ersten und zweiten Bildsignale, welche das erste und das zweite Specklemuster bei den beiden voneinander verschiedenen ersten und zweiten Wellenlängen repräsentieren, ist das System sehr schnell und erlaubt eine flächige Vermessung der Oberfläche des Prüflings.

Die Strahlungsquelle ist derart eingerichtet, dass sie in einem Betrieb des Systems die erste elektromagnetische Strahlung und die zweite elektromagnetische Strahlung erzeugt und abstrahlt. In einer Ausführungsform umfasst die Strahlungsquelle einen einzigen Emitter, beispielsweise einen Zweifarbenlaser, welcher die erste elektromagnetische Strahlung mit der ersten Wellenlänge und die zweite elektromagnetische Strahlung mit der zweiten Wellenlänge generiert. In einer alternativen Ausführungsform umfasst die Strahlungsquelle zwei Emitter, beispielsweise zwei Laser, von denen jeder eine der ersten und zweiten elektromagnetischen Strahlungen erzeugt.

In einer Ausführungsform der Erfindung ist ein Emitter der Strahlungsquelle ein Diodenlaser, vorzugsweise ein Diodenlaser im roten oder infraroten Wellenlängenbereich.

Während die Erfindung vereinfachend für die erste und die zweite Wellenlänge im Detail beschrieben wird, weist das System in einer Ausführungsform eine Strahlungsquelle für mehr als zwei Wellenlängen auf. Es versteht sich, dass dann auch die Anzahl der voneinander verschiedenen Teilflächen der Sensorfläche gleich der Anzahl von Wellenlängen ist und jeder der Teilflächen eine elektromagnetische Strahlung mit jeweils einer Wellenlänge erfasst.

Entscheidend ist, dass die Strahlungsquelle die erste und die zweite elektromagnetische Strahlung mit der erforderlichen Kohärenz generiert und abstrahlt, um das erste und das zweite Specklemuster bei der Reflexion oder Streuung der elektromagnetischen Strahlung an der Oberfläche des Prüflings zu erzeugen. Die erforderliche minimale Kohärenzlänge, welche die erste und die zweite elektromagnetische Strahlung jeweils aufweisen müssen, damit ein Specklemuster generiert wird, hängt davon ab, welche maximale Rauheit für die Oberfläche der zu charakterisierenden Prüflinge zu erwarten ist. Grundsätzlich gilt, dass die Kohärenzlänge mindestens so groß sein muss, dass die reflektierte elektromagnetische Strahlung ein Specklemuster ausbildet. Dabei muss die von zwei benachbarten Oberflächenabschnitten reflektierte elektromagnetische Strahlung konstruktiv oder destruktiv miteinander interferieren können, damit ein Specklemuster gebildet wird.

Die erste und die zweite Wellenlänge sind in einer Ausführungsform der Erfindung jeweils Element eines ersten bzw. eines zweiten Wellenlängenbereichs, wobei der erste und der zweite Wellenlängenbereich vollständig voneinander verschieden sind, d.h. sich nicht überlappen.

In einer Ausführungsform der Erfindung haben die erste Wellenlänge und die zweite Wellenlänge eine Wellenlängendifferenz in einem Bereich von 1 nm bis 15 nm.

Damit die Ähnlichkeit zwischen dem ersten Bildsignal des ersten Specklemusters und des zweiten Bildsignals des zweiten Specklemusters die Rauheit der Oberfläche charakterisiert, müssen die erste und die zweite elektromagnetische Strahlung dieselbe Beleuchtungsfläche beleuchten, wobei in dem Betrieb des Systems die Oberfläche des Prüflings bzw. ein Abschnitt der Oberfläche des Prüflings in der Beleuchtungsfläche anordenbar ist, d.h. mit der ersten und der zweiten elektromagnetischen Strahlung der gleiche Ausschnitt der Oberfläche des Prüflings beleuchtbar ist.

In einer Ausführungsform der Erfindung ist die Beleuchtungsoptik derart ausgestaltet und angeordnet, dass die Beleuchtungsoptik in dem Betrieb des Systems mit der ersten und der zweiten elektromagnetischen Strahlung eine streifenförmige Beleuchtungsfläche erzeugt. Eine solche Ausführungsform ist insbesondere dann vorteilhaft, wenn es sich bei dem Prüfling um einen bewegten, flächigen Prüfling, beispielsweise ein bandförmiges Halbzeug, handelt. Erstreckt sich die Beleuchtungsfläche streifenförmig nach Art einer zeilenförmigen Beleuchtung über die gesamte Breite des Prüflings, wobei sich die Zeile im Wesentlichen senkrecht zur Bewegungsrichtung des Prüflings erstreckt, so lässt sich mit dem System die gesamte Oberfläche des bandförmigen Prüflings vollständig erfassen und charakterisieren.

In einer Ausführungsform der Erfindung ist die Auswerteeinrichtung ein Rechner mit einem Prozessor und einer auf dem Prozessor ausgeführten Software zur Auswertung der ersten und zweiten Bildsignale.

Das Maß für die Ähnlichkeit zwischen dem ersten Bildsignal und dem zweiten Bildsignal ist in einer Ausführungsform eine Korrelation zwischen diesen beiden ersten und zweiten Bildsignalen.

Die Sensorfläche und damit jede der ersten und zweiten Teilflächen umfasst eine Mehrzahl von Bildpunkten oder Pixeln. Eine Sensorfläche mit einer Mehrzahl von Bildpunkten ermöglicht es, das jeweilige Specklemuster ortsaufgelöst als Bild zu erfassen. In einer Ausführungsform der Erfindung umfassen die Bildpunkte mindestens eine Zeile von Bildpunkten. In einer Ausführungsform der Erfindung sind die Bildpunkte der Sensorfläche in einer rechteckigen Matrix angeordnet.

In einer Ausführungsform der Erfindung wird die Sensorfläche von zwei nebeneinander in der Sensorebene angeordneten Bildsensoren gebildet. Jeder der beiden Bildsensoren bildet dann eine der ersten und zweiten Teilflächen der Sensorfläche. In einer Ausführungsform der Erfindung werden die erste und die zweite Teilfläche der Sensorfläche von zwei nebeneinander auf dem gleichen Träger bzw. der gleichen Platine montierten Bildsensoren gebildet. Es versteht sich, dass auch dann beide Teilflächen der Sensorfläche in ein und derselben Sensorebene liegen. Dabei wird der Begriff Bildsensor in dieser Anmeldung gleichbedeutend mit einem Chip zur Bilderfassung (Kamerachip) verwendet.

In einer Ausführungsform der Erfindung ist der Bildsensor ein CCD-Chip oder ein CMOS-Chip.

In einer alternativen Ausführungsform der Erfindung sind die erste und zweite Teilfläche der Sensorfläche Teilflächen eines einzigen Bildsensors. Aufgrund dessen, dass die erste und die zweite Teilfläche Teilflächen eines einzigen Chips sind, liegen sie zwangsläufig in einer einzigen Sensorebene. Eine Ausführungsform der Erfindung, bei welcher für die erste und zweite Teilfläche der Sensorfläche unterschiedliche Bereiche des gleichen Bildsensors verwendet werden, weist den Vorteil auf, dass kein weiterer Montageaufwand notwendig ist, um zu gewährleisten, dass die erste und die zweite Teilfläche der Sensorfläche in der einzigen Sensorebene liegen.

In einer Ausführungsform der Erfindung umfasst die Erfassungsoptik mindestens ein spektrales Filter, wobei das mindestens eine spektrale Filter derart ausgestaltet und angeordnet ist, dass in dem Betrieb des Systems die erste elektromagnetische Strahlung auf die erste Teilfläche, nicht aber auf die zweite Teilfläche gelangt und die zweite elektromagnetische Strahlung auf die zweite Teilfläche, nicht aber auf die erste Teilfläche gelangt.

In einer Ausgestaltung des Systems ist ein solches spektrales Filter ein Filter, welches nur eine der beiden Wellenlängen reflektiert oder transmittiert. In einer Ausführungsform der Erfindung ist das spektrale Filter ein Transmissionsfilter und lässt nur eine der beiden Wellenlängen durch, sodass nur diese auf die entsprechende Teilfläche der Sensorfläche gelangt. In einer Ausführungsform der Erfindung umfasst die Erfassungsoptik zwei spektrale Filter, wobei jedes der beiden spektralen Filter genau eine der beiden Wellenlängen auf genau eine der beiden Teilflächen treffen lässt.

Erfindungsgemäß umfasst die Erfassungsoptik ein strahlpfadteilendes Element, wobei das strahlpfadteilende Element derart ausgestaltet und angeordnet ist, dass das strahlpfadteilende Element in dem Betrieb des Systems von der Oberfläche des Prüflings in der Beleuchtungsfläche die elektromagnetische Strahlung auf einen ersten Strahlpfad zu der ersten Teilfläche und auf einen zweiten Strahlpfad zu der zweiten Teilfläche aufteilt.

In einer Ausführungsform der Erfindung ist das strahlpfadteilende Element ein Strahlteiler, der die Leistung der elektromagnetischen Strahlung unabhängig von ihrer Wellenlänge auf den ersten und den zweiten Strahlpfad aufteilt. Ein Strahlteiler im Sinne der vorliegenden Anmeldung ist ein optisches Element, welches einen Strahl der elektromagnetischen Strahlung transmittiert und einen anderen reflektiert. Dabei kann die Strahlteilung in einem 50:50-Verhältnis erfolgen, aber auch andere Teilungsverhältnisse sind möglich und gegebenenfalls sinnvoll.

In einer Ausführungsform, bei welcher das strahlpfadteilende Element ein wellenlängenunabhängiger Strahlteiler ist, umfasst das mindestens eine spektrale Filter ein erstes spektrales Filter und ein zweites spektrales Filter, wobei das erste spektrale Filter in dem ersten Strahlpfad angeordnet ist und das zweite spektrale Filter in dem zweiten Strahlpfad angeordnet ist, wobei das erste spektrale Filter derart ausgestaltet und angeordnet ist, dass in dem Betrieb des Systems die erste elektromagnetische Strahlung auf die erste Teilfläche, nicht aber auf die zweite Teilfläche gelangt und wobei das zweite spektrale Filter derart ausgestaltet und angeordnet ist, dass die zweite elektromagnetische Strahlung auf die zweite Teilfläche, nicht aber auf die erste Teilfläche gelangt.

In einer alternativen Ausführungsform umfasst das strahlpfadteilende Element das mindestens eine spektrale Filter. In einer Ausführungsform ist dabei das strahlpfadteilende Element ein dichroitischer Strahlteiler, welcher eine der ersten und zweiten Wellenlängen durchlässt und die andere Wellenlänge reflektiert. In einer Ausführungsform, in der das strahlpfadteilende Element das mindestens eine spektrale Filter umfasst, ist die Anordnung eines weiteren spektralen Filterung in dem ersten und/oder dem zweiten Strahlpfad nicht unbedingt notwendig, kann aber zusätzlich erfolgen, um ein Übersprechen zwischen den beiden Strahlpfaden zu verhindern.

Erfindungsgemäß ist zumindest in dem ersten Strahlpfad oder in dem zweiten Strahlpfad zumindest ein Weglängenausgleichselement angeordnet, wobei das Weglängenausgleichselement derart ausgestaltet ist, dass eine erste optische Weglänge des ersten Strahlpfads und eine zweite optische Weglänge des zweiten Strahlpfads zwischen dem strahlpfadteilenden Element und der Sensorfläche gleich lang sind. Auf diese Weise lassen sich die jeweiligen optischen Weglängen für die erste und die zweite elektromagnetische Strahlung zwischen der Oberfläche des Prüflings in der Beleuchtungsfläche und der Sensorfläche angleichen und Weglängenunterschiede, welche sich beispielsweise durch die Verwendung eines Strahlteilers ergeben, kompensieren. Während beide elektromagnetischen Strahlungen sich zwischen der Oberfläche des Prüflings und dem strahlpfadteilenden Element den gleichen Strahlpfad teilen und daher die identische optische Weglänge aufweisen, verlaufen sie nach dem strahlpfadteilenden Element auf räumlich getrennten ersten und zweiten Strahlpfaden, deren optische Weglängen gleich lang gestaltet werden müssen.

In einer Ausführungsform der Erfindung ist das Weglängenausgleichselement ein Glasblock.

In einer Ausführungsform umfasst das strahlpfadteilende Element ein erstes strahlablenkendes Element und ein zweites strahlablenkendes Element, wobei das erste und das zweite strahlablenkende Element derart angeordnet sind, dass eine Fourierebene der Erfassungsoptik das erste und das zweite strahlablenkende Element schneidet. Dabei ist das erste strahlablenkende Element derart ausgestaltet und angeordnet ist, dass das erste strahlablenkende Element in dem Betrieb des Systems die von der Oberfläche des Prüflings in der Beleuchtungsfläche reflektierte elektromagnetische Strahlung auf den ersten Strahlpfad zu der ersten Teilfläche ablenkt und das zweite strahlablenkende Element derart ausgestaltet und angeordnet ist, dass das zweite strahlablenkende Element in dem Betrieb des Systems die von der Oberfläche des Prüflings in der Beleuchtungsfläche reflektierte elektromagnetische Strahlung auf den zweiten Strahlpfad zu der zweiten Teilfläche ablenkt.

Bei dieser Ausführungsform basiert die Strahlaufteilung auf die beiden die ersten und zweiten Teilabschnitte der Sensorfläche adressierenden ersten und zweiten Strahlpfade auf einer Strahlablenkung im Bereich der Fourierebene der Erfassungsoptik. Entscheidend für das Funktionieren einer solchen Strahlaufteilung ist, dass auf jedem ersten und zweiten strahlablenkenden Element jeweils die vollständige Information sowohl des ersten als auch des zweiten Specklemusters vorliegt.

Es versteht sich, dass auch bei einer solchen Strahlaufteilung im Fourier-Raum bei oder nach der Aufteilung eine spektrale Filterung des ersten und zweiten Strahlpfads erfolgen muss, damit die ersten und zweiten Teilflächen jeweils nur eines der ersten und zweiten Specklemuster erfassen. In einer Ausführungsform der Erfindung kann ein spektrales Filter jeweils direkt an oder auf dem strahlablenkenden Element vorgesehen sein. In einer alternativen Ausführungsform ist das spektrale Filter, wie zuvor für den Strahlteiler beschrieben, in dem ersten und/oder zweitem Strahlpfad angeordnet.

In einer Ausführungsform der Erfindung ist das strahlablenkende Element ein reflektierendes Element oder ein diffraktives Element.

In einer Ausführungsform der Erfindung sind das erste und das zweite strahlablenkende Element in zumindest einer Schnittebene senkrecht zu einer optischen Achse der von der Erfassungsoptik abgebildeten ersten und zweiten elektromagnetischen Strahlung in einer Strahlrichtung vor dem strahlpfadteilenden Element drehsymmetrisch zu der optischen Achse. In einer Ausführungsform sind das erste und das zweite strahlablenkende Element in allen Schnittebenen senkrecht zu der optischen Achse betrachtet drehsymmetrisch zu der optischen Achse. In einer Ausführungsform ist die Drehsymmetrie zweizählig, d.h. eine Drehung des ersten strahlablenkenden Elements bildet es auf das zweite strahlablenkende Element ab.

In einer Ausführungsform der Erfindung sind das erste und das zweite strahlablenkende Element in zumindest einer Schnittebene senkrecht zu einer optischen Achse punktsymmetrisch um einen Punkt auf der optischen Achse.

In einer solchen Anordnung enthält aus Symmetriegründen sowohl die erste elektromagnetische Strahlung als auch die zweite elektromagnetische Strahlung auf beiden ersten und zweiten strahlablenkenden Elementen die gesamte Information des ersten bzw. zweiten Specklemusters.

Gemäß einer Ausführungsform der vorliegenden Erfindung ist die Sensorfläche zu einer Strahlachse zumindest des ersten oder des zweiten Strahlpfads vor der Sensorfläche unter einem von 90° verschiedenen Winkel angeordnet.

Durch die Verkippung der Sensorfläche gegenüber zumindest einer der Strahlachsen des ersten oder des zweiten Strahlpfads gibt es bei entsprechender Anordnung der Sensorfläche immer einen Bereich, in dem ersten Teilabschnitt und einen Bereich in dem zweiten Teilabschnitt der Sensorfläche, für welchen die optischen Weglängen des ersten Strahlpfads und des zweiten Strahlpfads identisch sind.

In einer Ausführungsform der Erfindung sind der erste Strahlpfad und der zweite Strahlpfad vor der Sensorfläche im Wesentlichen parallel zueinander, vorzugsweise parallel zueinander.

In einer Ausführungsform der Erfindung ist eine asymmetrische Blende in einem Strahlengang der von der Oberfläche des Prüflings reflektierten oder gestreuten ersten elektromagnetischen Strahlung und zweiten elektromagnetischen Strahlung angeordnet. Auf diese Weise ist bei einem bewegten Prüfling und entsprechender Ausrichtung der Blende die mittlere Specklegröße in der Bewegungsrichtung größer als senkrecht dazu, um die Einflüsse der Bewegungsunschärfe zu reduzieren.

In einer Ausführungsform der Erfindung ist die Sensorebene außerhalb eines Fokus der Erfassungsoptik angeordnet. Auf diese Weise können die Einflüsse der Oberfläche reduziert und die Genauigkeit der Messung erhöht werden.

Zumindest eine der zuvor genannten Aufgaben wird auch durch eine Vorrichtung gelöst, wobei die Vorrichtung ein System, so wie es in Ausführungsformen davon zuvor beschrieben wurde, umfasst sowie eine Bewegungseinrichtung. Dabei ist die Bewegungseinrichtung derart ausgestaltet und angeordnet, dass die Bewegungseinrichtung in einem Betrieb der Vorrichtung die Oberfläche des Prüflings relativ zu der Beleuchtungsfläche bewegt.

In einer Ausführungsform der Erfindung ist eine solche Relativbewegung zwischen der Oberfläche des Prüflings und der Beleuchtungsfläche linear. In einer weiteren Ausführungsform der Erfindung ist die Relativbewegung zwischen der Oberfläche und der Beleuchtungsfläche kontinuierlich.

Zumindest eine der zuvor genannten Aufgaben wird auch durch ein Verfahren zum Charakterisieren einer Rauheit einer Oberfläche eines Prüflings gemäß dem darauf gerichteten unabhängigen Anspruch gelöst. Dazu weist der in dem Verfahren der eingangs genannten Art verwendete Detektor eine Sensorfläche in genau einer Sensorebene auf und das erste Specklemuster wird auf eine erste Teilfläche der Sensorfläche und das zweite Specklemuster wird auf eine zweite Teilfläche der Sensorfläche abgebildet, wobei die erste und die zweite Teilfläche voneinander verschieden sind.

Soweit hierin Aspekte der Erfindung im Hinblick auf das Verfahren beschrieben werden, so gelten diese auch für das entsprechende System zum Charakterisieren einer Rauheit der Oberfläche des Prüflings und umgekehrt. Soweit das Verfahren mit einem System gemäß dieser Erfindung ausgeführt wird, so weist dieses die entsprechenden Einrichtungen hierfür auf.

Insbesondere sind Ausführungsformen des Systems zum Ausführen des hierin beschriebenen Verfahrens und seiner Ausführungsformen geeignet.

In einer Ausführungsform des erfindungsgemäßen Verfahrens wird die Oberfläche des Prüflings zumindest kontinuierlich oder linear relativ zu der Beleuchtungsfläche bewegt.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine schematische Darstellung eines Systems zum Charakterisieren einer Rauheit einer Oberfläche eines Prüflings.
- Figur 2: ist eine detailliertere Darstellung des Detektors aus Figur 1 gemäß einer ersten Variante.
- Figur 3: ist eine detailliertere Darstellung des Detektors aus Figur 1 gemäß einer zweiten Variante.
- Figur 4: ist eine detailliertere Darstellung einer ersten Ausführungsform des Detektors und der Erfassungsoptik des Systems aus Figur 1.
- Figur 5: ist eine detailliertere Darstellung eines nicht als solches beanspruchten Beispiels des Detektors und der Erfassungsoptik des Systems aus Figur 1.

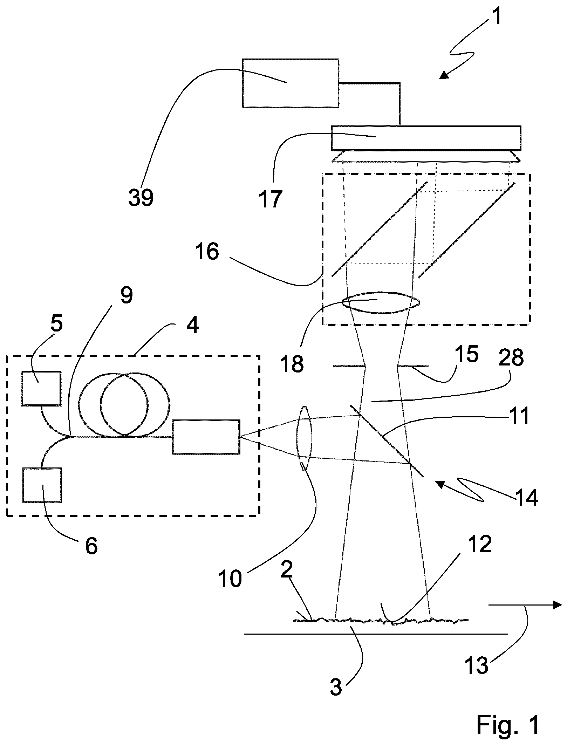

Figur 1 zeigt schematisch den Aufbau eines Systems 1 zum Charakterisieren der Rauheit einer Oberfläche 2 eines Prüflings 3. Das System 1 beruht auf einer Abbildung eines bei der Reflexion oder Streuung von kohärenter elektromagnetischer Strahlung an der rauen Oberfläche 2 durch Interferenz generierten Specklemusters aus helleren und dunkleren Flecken. Das zu beobachtende Specklemuster hat ein von der Wellenlänge der elektromagnetischen Strahlung abhängiges Erscheinungsbild.

Daher verfügt das System 1 über eine Strahlungsquelle 4 mit zwei Diodenlasern 5, 6 als Emitter. Der erste Diodenlaser 5 emittiert eine erste elektromagnetische Strahlung 7 mit einer ersten Wellenlänge bei 633 nm und der zweite Diodenlaser 5 emittiert eine zweite elektromagnetische Strahlung 8 mit einer zweiten Wellenlänge bei 638 nm. Dabei werden die erste und die zweite elektromagnetische Strahlung gleichzeitig erzeugt und abgestrahlt. Die erste und die zweite Wellenlänge bezeichnen jeweils die Schwerpunktwellenlänge der emittierten Strahlung innerhalb eines ersten und eines zweiten Wellenlängenbandes. Die beiden Wellenlängenbänder sind vollständig voneinander verschieden und überlappen einander nicht.

Die erste und die zweite elektromagnetische Strahlung werden mit einem Faserkoppler 9 einander räumlich überlagert. Eine Linse 10 kollimiert die beiden überlagerten Strahlungen 7, 8 und mittels eines Strahlteilers 11 werden diese auf die Oberfläche 2 des Prüflings 3 reflektiert. Auf der Oberfläche 2 beleuchten sie eine streifenförmige Beleuchtungsfläche 12, d.h. ein Messfeld mit 100 x 100 mm². Der Prüfling 3 wird in der gezeigten Ausführungsform mit einer konstanten Geschwindigkeit von bis zu 0,6 m/s linear bewegt. Die Beleuchtungsfläche 10 erstreckt sich nach Art einer Zeile senkrecht zur Bewegungsrichtung 13 des Prüflings 3. Die Linse 10 und der Strahlteiler 11 werden zusammen als Beleuchtungsoptik 14 bezeichnet.

Die von der ersten und der zweiten elektromagnetischen Strahlung 7, 8 generierten Specklemuster sind durch den Strahlteiler 11 und eine Blende 15 in Transmission sichtbar. Die Blende 15 dient dazu, die Eigenschaften der Speckle-Felder einzustellen, um die Messung zu optimieren.

Eine Erfassungsoptik 16 bildet die beiden Specklemuster auf einen Detektor 17 ab. Die Erfassungsoptik 16 umfasst ein Objektiv 18 mit 50 mm Brennweite und weitere Komponenten. Aufgabe der Erfassungsoptik 16 ist es, die Specklemuster räumlich getrennt voneinander auf eine erste und eine zweite Teilfläche 19, 20 einer Sensorfläche 21 abzubilden.

Entscheidend für die Realisierung der mit der Erfindung einhergehenden Vorteile ist, dass die beiden Teilflächen 19, 20 der Sensorfläche 21 in einer einzigen Sensorebene 22 liegen. Auf diese Weise ist das System 1 einfach zu justieren und robust gegenüber Umgebungseinflüssen, so wie sie in Produktionsumgebungen auftreten.

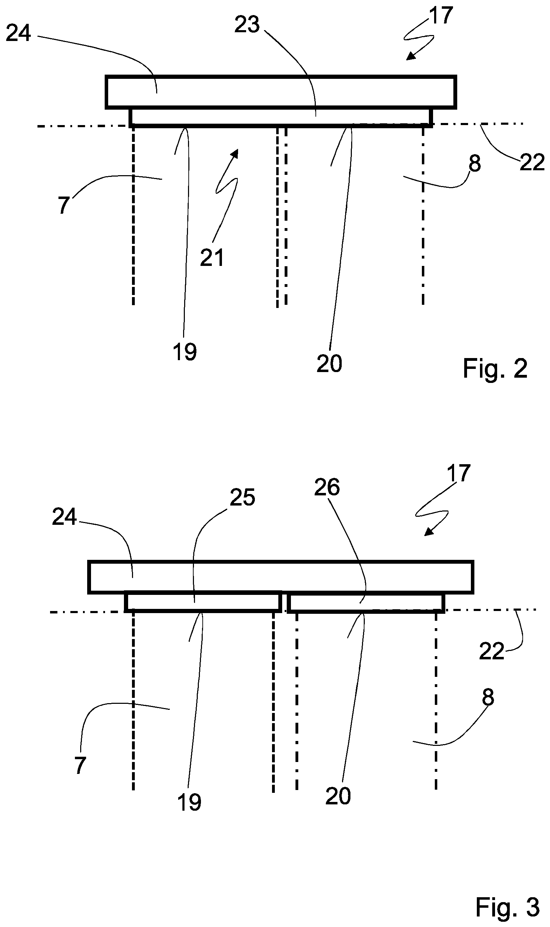

Die Figuren 2 und 3 zeigen zwei Varianten eines Detektors 17 mit in der gleichen Sensorebene 22 angeordneten Teilflächen 19, 20 der Sensorfläche 21. Bei der Variante aus Figur 2 ist ein CMOS-Chip 23 als einziger Bildsensor des Detektors 17 auf einer Platine 24 montiert. Die beiden Teilflächen 19, 20 der Sensorfläche 21 werden von zwei Teilflächen dieses CMOS-Chips 23 gebildet. In dieser Ausführungsform liegen die Teilflächen 19, 20 per se in der gleichen Sensorebene 22. Die beiden Speckle-Muster der ersten und der zweiten elektromagnetischen Strahlung 7, 8 werden also mit dem gleichen Bildsensor erfasst.

Die Variante aus Figur 3 hingegen setzt auf einen Detektor 17, bei welchem zwei getrennte CMOS-Chips 25, 26 nebeneinander auf einer Platine 24 montiert sind. Die beiden CMOS-Chips 25, 26 gemeinsam bilden in dieser Variante die beiden Teilflächen 19, 20 der Sensorfläche 21. Auch diese liegen in einer einzigen Sensorebene 22.

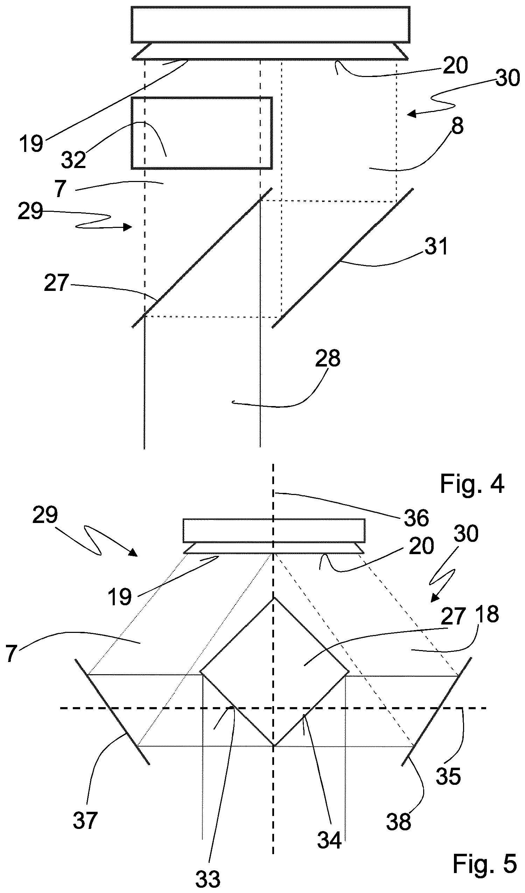

Figur 4 zeigt eine Ausführungsform und Figur 5 ein nicht als solches beanspruchtes Beispiel der weiteren Komponenten der Erfassungsoptik 18. Die Figuren verdeutlichen, wie die von dem Objektiv 18 abgebildeten ersten und zweiten Specklemuster räumlich voneinander getrennt auf die nebeneinanderliegenden Teilflächen 19, 20 der Sensorfläche 21 geleitet werden.

In beiden Ausführungsformen umfasst die Erfassungsoptik 16 ein strahlpfadteilendes Element 27, welches die von der Oberfläche 2 des Prüflings 3 in der Beleuchtungsfläche 12 reflektierte elektromagnetische Strahlung 28 auf einen ersten Strahlpfad 29 zu der ersten Teilfläche 19 und auf einen zweiten Strahlpfad 30 zu der zweite Teilfläche 20 aufteilt. Ferner weist die Erfassungsoptik 16 in beiden Ausführungsformen ein spektrales Filter auf, welches bewirkt, dass die erste elektromagnetische Strahlung 7 nur auf die erste Teilfläche 19, nicht aber auf die zweite Teilfläche 20 gelangt und dass die zweite elektromagnetische Strahlung 8 auf die zweite Teilfläche 20, nicht aber auf die erste Teilfläche 19 gelangt.

In der Ausführungsform aus Figur 4 werden das strahlpfadteilende Element und das spektrale Filter von einem dichroitischen Strahlteiler 27 gebildet. Dieser transmittiert die erste Wellenlänge der ersten elektromagnetischen Strahlung 7 auf die erste Teilfläche 19 und reflektiert die zweite Wellenlänge der zweiten elektromagnetischen Strahlung 8. Damit die zweite elektromagnetische Strahlung auf die zweite Teilfläche 20 gelangt, ist ein Spiegel 31 zur Strahlumlenkung vorgesehen.

Um eine Vergleichbarkeit zwischen dem ersten Specklemuster bei der ersten Wellenlänge und dem zweiten Specklemuster bzw. die diese repräsentierenden ersten und zweiten Bildsignale zu ermöglichen, müssen die optischen Weglängen zwischen der Beleuchtungsfläche 12 auf der Oberfläche 2 des Prüflings 3 und der Sensorfläche 21 des Detektors 17 für die erste und die zweite elektromagnetische Strahlung 7, 8 identisch sein.

Für einen Abgleich der optischen Weglängen der ersten und zweiten Strahlpfade 29, 30 ist in der Ausführungsform aus Figur 4 in dem ersten Strahlpfad 29 ein Weglängenausgleichselement in Form eines Glasblocks 32 vorgesehen.

In dem Beispiel aus Figur 5 wird das strahlpfadteilende Element 27 von zwei strahlablenkenden Elementen in Form einer ersten und einer zweiten spiegelnden Fläche 33, 34 gebildet. Die erste und die zweite spiegelnde Fläche 33, 34 sind so angeordnet, dass die Fourierebene 35 des Objektivs 18 die erste und die zweite spiegelnde Fläche 33, 34 schneidet. Die um die Fourierebene 35 herum angeordneten erste und zweite spiegelnde Flächen 33, 34 sind in jeder Schnittebene senkrecht zu einer optischen Achse 36 der von dem Objektiv 18 abgebildeten ersten und zweiten elektromagnetischen Strahlung 7, 8 in einer Strahlrichtung vor dem strahlpfadteilenden Element 27, beispielsweise der Fourierebene 35, 180° drehsymmetrisch um die optische Achse 36. So wird gewährleistet, dass auf der ersten und der zweiten spiegelnde Flächen 33, 34 jeweils die vollständige Information sowohl des ersten als auch des zweiten Specklemusters vorliegt.

Bei dieser Strahlaufteilung im Fourier-Raum erfolgt eine spektrale Filterung des ersten und zweiten Strahlpfads 7, 8, damit die ersten und zweiten Teilflächen 19, 20 jeweils nur eines der ersten und zweiten Specklemuster erfassen. In der Ausführungsform aus Figur 5 ist umfasst jeweils eine Strahlumlenkung im ersten bzw. zweiten Strahlpfad 29, 30 ein spektrales Filter in Form eines wellenlängenangepassten dielektrischen Spiegels 37, 38.

Das bei der ersten Wellenlänge generierte erste Specklemuster und das zweite bei der zweiten Wellenlänge aufgenommene Specklemuster des gleichen Oberflächenabschnitts 2 des Prüflings 3 weisen eine Ähnlichkeit auf, deren Maß die Rauheit der Oberfläche 2 charakterisiert. Daher bildet in den dargestellten Ausführungsformen eine Auswerteeinrichtung in Form eines Rechners 39 eine Korrelation zwischen einem ersten Bildsignal, welches das von der ersten Teilfläche 19 erfasste erste Specklemuster bei der ersten Wellenlänge repräsentiert, und einem zweiten Bildsignal, welches das von der zweiten Teilfläche 20 erfasste zweite Specklemuster bei der zweiten Wellenlänge repräsentiert. Diese Korrelation bildet wiederum ein Maß für die Rauheit der Oberfläche. Eine vergleichsweise glatte Oberfläche 2 mit einer geringen Rauheit führt zu einer größeren Ähnlichkeit zwischen den beiden Specklemuster und eine rauere Oberfläche 2 führt zu einer geringeren Ähnlichkeit. Das beschriebene System 1 ermöglicht einen Rauheits-Messbereich von 0.8 µm Sa bis 3.5 µm Sa.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 2: Oberfläche
- 3: Prüfling
- 4: Strahlungsquelle
- 5, 6: Diodenlaser
- 7: erste elektromagnetische Strahlung
- 8: zweite elektromagnetische Strahlung
- 9: Faserkoppler
- 10: Linse
- 11: Strahlteiler
- 12: Beleuchtungsfläche
- 13: Bewegungsrichtung
- 14: Beleuchtungsoptik
- 15: Blende
- 16: Erfassungsoptik
- 17: Detektor
- 18: Objektiv
- 19: erste Teilfläche
- 20: zweite Teilfläche
- 21: Sensorfläche
- 22: Sensorebene
- 23: CMOS-Chip
- 24: Platine
- 25, 26: CMOS-Chip
- 27: strahlpfadteilendes Element
- 28: elektromagnetische Strahlung
- 29: erster Strahlpfad
- 30: zweiter Strahlpfad
- 31: Spiegel
- 32: Glasblock
- 33: erste spiegelnde Fläche
- 34: zweite spiegelnde Fläche
- 35: Fourierebene
- 36: optische Achse
- 37, 38: dielektrischer Spiegel
- 39: Rechner

## Patentansprüche

1. System (1) zum Charakterisieren einer Rauheit einer Oberfläche (2) eines Prüflings (3) aufweisend
eine Strahlungsquelle (4),
wobei die Strahlungsquelle (4) derart eingerichtet ist, dass die Strahlungsquelle (4) in einem Betrieb des Systems (1) eine kohärente erste elektromagnetische Strahlung (7) mit einer ersten Wellenlänge und eine kohärente zweite elektromagnetische Strahlung (8) mit einer zweiten Wellenlänge erzeugt und abstrahlt, und wobei die erste Wellenlänge von der zweiten Wellenlänge verschieden ist,
eine Beleuchtungsoptik (14),
wobei die Beleuchtungsoptik (14) derart ausgestaltet und angeordnet ist, dass die Beleuchtungsoptik (14) in dem Betrieb des Systems (1) mit der ersten elektromagnetischen Strahlung (7) eine Beleuchtungsfläche (12) beleuchtet und mit der zweiten elektromagnetischen Strahlung (8) dieselbe Beleuchtungsfläche (12) beleuchtet und
dass in dem Betrieb des Systems (1) die Oberfläche (2) des Prüflings (3) in der Beleuchtungsfläche (12) anordenbar ist,
eine Erfassungsoptik (16),
einen bilderzeugenden Detektor (17),
wobei die Erfassungsoptik (16) und der Detektor (17) derart ausgestaltet und angeordnet sind, dass die Erfassungsoptik (16) in dem Betrieb ein an der Oberfläche (2) des Prüflings (3) in der Beleuchtungsfläche (12) von der ersten elektromagnetischen Strahlung (7) erzeugtes erstes Specklemuster und ein an der Oberfläche (2) des Prüflings (3) in der Beleuchtungsfläche (12) von der zweiten elektromagnetischen Strahlung (8) erzeugtes zweites Specklemuster auf den Detektor (17) abbildet, und
eine Auswerteeinrichtung (39),
wobei die Auswerteeinrichtung (39) derart mit dem Detektor (17) verbunden ist, dass die Auswerteeinrichtung (39) in dem Betrieb des Systems (1) ein das erste Specklemuster repräsentierendes erstes Bildsignal und ein das zweite Specklemuster repräsentierendes zweites Bildsignal von dem Detektor (17) erhält, und
wobei die Auswerteeinrichtung (39) derart eingerichtet ist, dass die Auswerteeinrichtung (39) in dem Betrieb des Systems (1) ein Maß für eine Ähnlichkeit zwischen dem ersten Bildsignal und dem zweiten Bildsignal bestimmt, wobei das Maß für die Ähnlichkeit die Rauheit der Oberfläche (2) charakterisiert,
**dadurch gekennzeichnet, dass**
der Detektor (17) eine Sensorfläche (21) in genau einer Sensorebene (22) aufweist,
die Erfassungsoptik (16) derart ausgestaltet ist, dass die Erfassungsoptik (16) das erste Specklemuster auf eine erste Teilfläche (19) der Sensorfläche (21) und das zweite Specklemuster auf eine zweite Teilfläche (20) der Sensorfläche (21) abbildet, wobei die erste und die zweite Teilfläche (20) voneinander verschieden sind,
die Erfassungsoptik (16) ein strahlpfadteilendes Element (27) umfasst, wobei das strahlpfadteilende Element (27) derart ausgestaltet und angeordnet ist, dass das strahlpfadteilende Element (27) in dem Betrieb des Systems (1) von der Oberfläche (2) des Prüflings (3) in der Beleuchtungsfläche (12) reflektierte elektromagnetische Strahlung (28) auf einen ersten Strahlpfad (29) zu der ersten Teilfläche (19) und auf einen zweiten Strahlpfad (30) zu der zweiten Teilfläche (20) aufteilt, und
zumindest in dem ersten Strahlpfad (29) oder in dem zweiten Strahlpfad (30) zumindest ein Weglängenausgleichselement (32) angeordnet ist, wobei das Weglängenausgleichselement (32) derart ausgestaltet ist, dass eine erste optische Weglänge des ersten Strahlpfads (29) und eine zweite optische Weglänge des zweiten Strahlpfads (30) zwischen dem strahlpfadteilenden Element (27) und der Sensorfläche (21) gleich lang sind.

2. System (1) nach dem vorhergehenden Anspruch, wobei die Sensorfläche (21) Teil genau eines Bildsensors (23) ist.

3. System (1) nach einem der vorhergehenden Ansprüche, wobei die Erfassungsoptik (16) mindestens ein spektrales Filter umfasst, wobei das mindestens eine spektrale Filter (27) derart ausgestaltet und angeordnet ist, dass in dem Betrieb des Systems (1) die erste elektromagnetische Strahlung (7) auf die erste Teilfläche, nicht aber auf die zweite Teilfläche (20) gelangt und die zweite elektromagnetische Strahlung (8) auf die zweite Teilfläche, nicht aber auf die erste Teilfläche (19) gelangt.

4. System (1) nach Anspruch 3, wobei das strahlpfadteilende Element (27) das mindestens eine spektrale Filter umfasst.

5. System (1) nach Anspruch 3 oder 4, wobei das mindestens eine spektrale Filter ein erstes spektrales Filter (37) und ein zweites spektrales Filter (38) umfasst, wobei das erste spektrale Filter (37) in dem ersten Strahlpfad (29) angeordnet ist und das zweite spektrale Filter (38) in dem zweiten Strahlpfad (30) angeordnet ist, wobei das erste spektrale Filter (37) derart ausgestaltet und angeordnet ist, dass in dem Betrieb des Systems (1) die erste elektromagnetische Strahlung (7) auf die erste Teilfläche, nicht aber auf die zweite Teilfläche (20) gelangt, und wobei das zweite spektrale Filter (38) derart ausgestaltet und angeordnet ist, dass die zweite elektromagnetische Strahlung (8) auf die zweite Teilfläche, nicht aber auf die erste Teilfläche (19) gelangt.

6. System (1) nach einem der vorhergehenden Ansprüche, wobei das strahlpfadteilende Element (27) ein Strahlteiler ist.

7. System (1) nach Anspruch 6, wobei der Strahlteiler ein dichroitischer Strahlteiler ist.

8. System (1) nach einem der Ansprüche 1 bis 5, wobei das strahlpfadteilende Element (27) ein erstes strahlablenkendes Element (33) und ein zweites strahlablenkendes Element (34) umfasst, wobei das erste und das zweite strahlablenkende Element (33, 34) derart angeordnet sind, dass eine Fourierebene (35) der Erfassungsoptik (16) das erste und das zweite strahlablenkende Element (33, 34) schneidet, wobei das erste strahlablenkende Element (33) derart ausgestaltet und angeordnet ist, dass das erste strahlablenkende Element (33) in dem Betrieb des Systems (1) die von der Oberfläche (2) des Prüflings (3) in der Beleuchtungsfläche (12) reflektierte elektromagnetische Strahlung (28) auf den ersten Strahlpfad (29) zu der ersten Teilfläche (19) ablenkt, und wobei das zweite strahlablenkende Element (34) derart ausgestaltet und angeordnet ist, dass das zweite strahlablenkende Element (34) in dem Betrieb des Systems (1) die von der Oberfläche (2) des Prüflings (3) in der Beleuchtungsfläche (12) reflektierte elektromagnetische Strahlung (28) auf den zweiten Strahlpfad (30) zu der zweiten Teilfläche (20) ablenkt.

9. System (1) nach dem vorhergehenden Anspruch, wobei das erste und das zweite strahlablenkende Element (33, 34) in zumindest einer Schnittebene senkrecht zu einer optischen Achse (36) der von der Erfassungsoptik (16) abgebildeten ersten und zweiten elektromagnetischen Strahlung (7, 8) in einer Strahlrichtung vor dem strahlpfadteilenden Element (27) drehsymmetrisch zu der optischen Achse (36) sind.

10. System (1) nach einem der vorhergehenden Ansprüche, wobei die Sensorfläche (21) zu einer Strahlachse zumindest des ersten oder des zweiten Strahlpfads vor der Sensorfläche (21) unter einem von 90 Grad verschiedenen Winkel angeordnet ist.

11. Vorrichtung mit einem System (1) nach einem der vorhergehenden Ansprüche und einer Bewegungseinrichtung, wobei die Bewegungseinrichtung derart ausgestaltet und angeordnet ist, dass die Bewegungseinrichtung in einem Betrieb der Vorrichtung die Oberfläche (2) des Prüflings (3) relativ zu der Beleuchtungsfläche (12) bewegt.

12. Verfahren zum Charakterisieren einer Rauheit einer Oberfläche (2) eines Prüflings (3) mit den Schritten
Erzeugen und Abstrahlen einer kohärenten ersten elektromagnetischen Strahlung (7) mit einer ersten Wellenlänge und einer kohärenten zweiten elektromagnetischen Strahlung (8) mit einer zweiten Wellenlänge, wobei die erste Wellenlänge von der zweiten Wellenlänge verschieden ist,
Beleuchten genau einer Beleuchtungsfläche (12) auf der Oberfläche (2) des Prüflings (3) mit der ersten elektromagnetischen Strahlung (7) und der zweiten elektromagnetischen Strahlung,
Abbilden eines an der Oberfläche (2) des Prüflings (3) in der Beleuchtungsfläche (12) von der ersten elektromagnetischen Strahlung (7) erzeugten ersten Specklemusters und eines an der Oberfläche (2) des Prüflings (3) in der Beleuchtungsfläche (12) von der zweiten elektromagnetischen Strahlung (8) erzeugten zweiten Specklemusters auf einen bilderzeugenden Detektor,
Erzeugen eines das erste Specklemuster repräsentierenden ersten Bildsignals und eines das zweite Specklemuster repräsentierenden zweiten Bildsignals und Bestimmen eines Maßes für eine Ähnlichkeit zwischen dem ersten Bildsignal und dem zweiten Bildsignal, wobei das Maß für die Ähnlichkeit die Rauheit der Oberfläche (2) charakterisiert,
**dadurch gekennzeichnet, dass**
der Detektor (17) eine Sensorfläche (21) in genau einer Sensorebene (22) aufweist,
das erste Specklemuster auf eine erste Teilfläche (19) der Sensorfläche (21) und das zweite Specklemuster auf eine zweite Teilfläche (20) der Sensorfläche (21) abgebildet werden, wobei die erste und die zweite Teilfläche (20) voneinander verschieden sind,
die Erfassungsoptik (16) ein strahlpfadteilendes Element (27) umfasst, wobei das strahlpfadteilende Element (27) derart ausgestaltet und angeordnet ist, dass das strahlpfadteilende Element (27) in dem Betrieb des Systems (1) von der Oberfläche (2) des Prüflings (3) in der Beleuchtungsfläche (12) reflektierte elektromagnetische Strahlung (28) auf einen ersten Strahlpfad (29) zu der ersten Teilfläche (19) und auf einen zweiten Strahlpfad (30) zu der zweite Teilfläche (20) aufteilt, und
zumindest in dem ersten Strahlpfad (29) oder in dem zweiten Strahlpfad (30) zumindest ein Weglängenausgleichselement (32) angeordnet ist, wobei das Weglängenausgleichselement (32) derart ausgestaltet ist, dass eine erste optische Weglänge des ersten Strahlpfads (29) und eine zweite optische Weglänge des zweiten Strahlpfads (30) zwischen dem strahlpfadteilenden Element (27) und der Sensorfläche (21) gleich lang sind.

13. Verfahren nach Anspruch 12, wobei die Oberfläche (2) des Prüflings, vorzugsweise zumindest kontinuierlich oder linear, relativ zu der Beleuchtungsfläche (12) bewegt wird.

## Claims

1. A system (1) for characterizing a roughness of a surface (2) of a test object (3), the system (1) comprising
a radiation source (4),
wherein the radiation source (4) is configured such that the radiation source (4), in an operation of the system (1), generates and emits a coherent first electromagnetic radiation (7) having a first wavelength and a coherent second electromagnetic radiation (8) having a second wavelength, and wherein the first wavelength is different from the second wavelength,
an illumination optical unit (14),
wherein the illumination optical unit (14) is configured and arranged such that the illumination optical unit (14), in the operation of the system (1), illuminates an illumination area (12) with the first electromagnetic radiation (7) and illuminates the same illumination area (12) with the second electromagnetic radiation (8), and
such that, in the operation of the system (1), the surface (2) of the test object (3) is arrangeable in the illumination area (12),
a detection optical unit (16),
an imaging detector (17),
wherein the detection optical unit (16) and the detector (17) are configured and arranged such that the detection optical unit (16), in the operation, images a first speckle pattern generated at the surface (2) of the test object (3) in the illumination area (12) by the first electromagnetic radiation (7) and a second speckle pattern generated at the surface (2) of the test object (3) in the illumination area (12) by the second electromagnetic radiation (8) onto the detector (17), and
an evaluation device (39),
wherein the evaluation device (39) is connected to the detector (17) such that the evaluation device (39), in the operation of the system (1), obtains from the detector (17) a first image signal representing the first speckle pattern and a second image signal representing the second speckle pattern, and
wherein the evaluation device (39) is set up such that the evaluation device (39), in the operation of the system (1), determines a measure of a similarity between the first image signal and the second image signal, wherein the measure of the similarity characterizes the roughness of the surface (2),
**characterized in that**
the detector (17) has a sensor surface (21) in exactly one sensor plane (22),
the detection optical unit (16) is configured such that the detection optical unit (16) images the first speckle pattern onto a first sub-area (19) of the sensor surface (21) and the second speckle pattern onto a second sub-area (20) of the sensor surface (21), wherein the first and the second sub-area (20) are different from one another,
the detection optical unit (16) comprises a beam-path-splitting element (27), wherein the beam-path-splitting element (27) is configured and arranged such that the beam-path-splitting element (27), in the operation of the system (1), splits electromagnetic radiation (28) reflected by the surface (2) of the test object (3) in the illumination area (12) onto a first beam path (29) to the first sub-area (19) and onto a second beam path (30) to the second sub-area (20), and
at least in the first beam path (29) or in the second beam path (30), at least one path-length compensation element (32) is arranged, wherein the path-length compensation element (32) is configured such that a first optical path length of the first beam path (29) and a second optical path length of the second beam path (30) between the beam-path-splitting element (27) and the sensor surface (21) are equal in length.

2. The system (1) according to the preceding claim, wherein the sensor surface (21) is part of exactly one image sensor (23).

3. The system (1) according to any one of the preceding claims, wherein the detection optical unit (16) comprises at least one spectral filter, wherein the at least one spectral filter (27) is configured and arranged such that, in the operation of the system (1), the first electromagnetic radiation (7) reaches the first sub-area, but not the second sub-area (20), and the second electromagnetic radiation (8) reaches the second sub-area, but not the first sub-area (19).

4. The system (1) according to claim 3, wherein the beam-path-splitting element (27) comprises the at least one spectral filter.

5. The system (1) according to claim 3 or 4, wherein the at least one spectral filter comprises a first spectral filter (37) and a second spectral filter (38), wherein the first spectral filter (37) is arranged in the first beam path (29) and the second spectral filter (38) is arranged in the second beam path (30), wherein the first spectral filter (37) is configured and arranged such that, in the operation of the system (1), the first electromagnetic radiation (7) reaches the first sub-area, but not the second sub-area (20), and wherein the second spectral filter (38) is configured and arranged such that the second electromagnetic radiation (8) reaches the second sub-area, but not the first sub-area (19).

6. The system (1) according to any one of the preceding claims, wherein the beam-path-splitting element (27) is a beam splitter.

7. The system (1) according to claim 6, wherein the beam splitter is a dichroic beam splitter.

8. The system (1) according to any one of claims 1 to 5, wherein the beam-path-splitting element (27) comprises a first beam-deflecting element (33) and a second beam-deflecting element (34), wherein the first and the second beam-deflecting element (33, 34) are arranged such that a Fourier plane (35) of the detection optical unit (16) intersects the first and the second beam-deflecting element (33, 34), wherein the first beam-deflecting element (33) is configured and arranged such that the first beam-deflecting element (33), in the operation of the system (1), deflects the electromagnetic radiation (28) reflected by the surface (2) of the test object (3) in the illumination area (12) onto the first beam path (29) to the first sub-area (19), and wherein the second beam-deflecting element (34) is configured and arranged such that the second beam-deflecting element (34), in the operation of the system (1), deflects the electromagnetic radiation (28) reflected by the surface (2) of the test object (3) in the illumination area (12) onto the second beam path (30) to the second sub-area (20).

9. The system (1) according to the preceding claim, wherein the first and the second beam-deflecting element (33, 34), in at least one sectional plane perpendicular to an optical axis (36) of the first and second electromagnetic radiation (7, 8) imaged by the detection optical unit (16), are rotationally symmetric with respect to the optical axis (36) in a beam direction before the beam-path-splitting element (27).

10. The system (1) according to any one of the preceding claims, wherein the sensor surface (21) is arranged at an angle different from 90 degrees with respect to a beam axis of at least the first or the second beam path before the sensor surface (21).

11. Device comprising a system (1) according to any one of the preceding claims and a motion device, wherein the motion device is configured and arranged such that the motion device, in an operation of the device, moves the surface (2) of the test object (3) relative to the illumination area (12).

12. A method for characterizing a roughness of a surface (2) of a test object (3), the method comprising the steps of
generating and emitting a coherent first electromagnetic radiation (7) having a first wavelength and a coherent second electromagnetic radiation (8) having a second wavelength, wherein the first wavelength is different from the second wavelength,
illuminating exactly one illumination area (12) on the surface (2) of the test object (3) with the first electromagnetic radiation (7) and the second electromagnetic radiation, imaging a first speckle pattern generated at the surface (2) of the test object (3) in the illumination area (12) by the first electromagnetic radiation (7) and a second speckle pattern generated at the surface (2) of the test object (3) in the illumination area (12) by the second electromagnetic radiation (8) onto an imaging detector,
generating a first image signal representing the first speckle pattern and a second image signal representing the second speckle pattern, and
determining a measure of a similarity between the first image signal and the second image signal, wherein the measure of the similarity characterizes the roughness of the surface (2),
**characterized in that**
the detector (17) has a sensor surface (21) in exactly one sensor plane (22),
the first speckle pattern is imaged onto a first sub-area (19) of the sensor surface (21) and the second speckle pattern is imaged onto a second sub-area (20) of the sensor surface (21), wherein the first and the second sub-area (20) are different from one another,
the detection optical unit (16) comprises a beam-path-splitting element (27), wherein the beam-path-splitting element (27) is configured and arranged such that the beam-path-splitting element (27), in the operation of the system (1), splits electromagnetic radiation (28) reflected by the surface (2) of the test object (3) in the illumination area (12) onto a first beam path (29) to the first sub-area (19) and onto a second beam path (30) to the second sub-area (20), and
at least in the first beam path (29) or in the second beam path (30), at least one path-length compensation element (32) is arranged, wherein the path-length compensation element (32) is configured such that a first optical path length of the first beam path (29) and a second optical path length of the second beam path (30) between the beam-path-splitting element (27) and the sensor surface (21) are equal in length.

13. The method according to claim 12, wherein the surface (2) of the test object is moved, preferably at least continuously or linearly, relative to the illumination area (12).

## Revendications

1. Système (1) pour caractériser une rugosité d'une surface (2) d'un échantillon (3) comprenant
une source de rayonnement (4),
la source de rayonnement (4) étant configurée de telle sorte que, lors d'un fonctionnement du système (1), elle produise et émette un premier rayonnement électromagnétique cohérent (7) avec une première longueur d'onde et un deuxième rayonnement électromagnétique cohérent (8) avec une deuxième longueur d'onde, et la première longueur d'onde étant différente de la deuxième longueur d'onde,
une optique d'éclairage (14),
l'optique d'éclairage (14) étant conçue et disposée de telle sorte que, lors du fonctionnement du système (1), l'optique d'éclairage (14) éclaire avec le premier rayonnement électromagnétique (7) une surface d'éclairage (12) et éclaire avec le deuxième le rayonnement électromagnétique (8) la même surface d'éclairage (12) et
que, lors du fonctionnement du système (1), la surface (2) de l'échantillon (3) puisse être disposée dans la surface d'éclairage (12),
une optique de détection (16),
un détecteur générateur d'image (17),
l'optique de détection (16) et le détecteur (17) étant conçus et disposés de telle sorte que, lors du fonctionnement, l'optique de détection (16) projette sur le détecteur (17) un premier motif de granularité généré par le premier rayonnement électromagnétique (7) sur la surface (2) de l'échantillon (3) dans la surface d'éclairage (12) et un deuxième motif de granularité généré par le deuxième rayonnement électromagnétique (8) sur la surface (2) de l'échantillon (3) dans la surface d'éclairage (12), et
un dispositif d'évaluation (39),
le dispositif d'évaluation (39) étant connecté au détecteur (17) de telle sorte que, lors du fonctionnement du système (1), le dispositif d'évaluation (39) reçoive du détecteur (17) un premier signal d'image représentant le premier motif de granularité et un deuxième signal d'image représentant le deuxième motif de granularité, et
le dispositif d'évaluation (39) étant agencé de telle sorte que, lors du fonctionnement du système (1), le dispositif d'évaluation (39) détermine une mesure pour une similitude entre le premier signal d'image et le deuxième signal d'image, la mesure pour la similarité caractérisant la rugosité de la surface (2),
**caractérisé en ce que**
le détecteur (17) comprend une surface de capteur (21) dans exactement un plan de capteur (22),
l'optique de détection (16) est agencée de telle sorte que l'optique de détection (16) projette le premier motif de granularité sur une première surface partielle (19) de la surface de capteur (21) et le deuxième motif de granularité sur une deuxième surface partielle (20) de la surface de capteur (21), la première et la deuxième surface partielle (20) étant différentes l'une de l'autre,
l'optique de détection (16) comprend un élément diviseur de trajet de faisceau (27), l'élément diviseur de trajet de faisceau (27) étant conçu et disposé de telle sorte que, lors du fonctionnement du système (1), l'élément diviseur de trajet de faisceau (27) répartisse du rayonnement électromagnétique (28) réfléchi par la surface (2) de l'échantillon (3) dans la surface d'éclairage (12) sur un premier trajet de faisceau (29) à la première surface partielle (19) et sur un deuxième trajet de faisceau (30) à la deuxième surface partielle (20), et
au moins un élément de compensation de longueur de trajet (32) est disposé au moins dans le premier trajet de faisceau (29) ou dans le deuxième trajet de faisceau (30), l'élément de compensation de longueur de trajet (32) étant conçu de telle sorte qu'une première longueur optique de trajet du premier trajet de faisceau (29) et une deuxième longueur optique de trajet du deuxième trajet de faisceau (30) entre l'élément diviseur de trajet de faisceau (27) et la surface de capteur (21) soient la même.

2. Système (1) selon la revendication précédente, la surface de capteur (21) faisant partie d'exactement un capteur d'image (23).

3. Système (1) selon l'une des revendications précédentes, l'optique de détection (16) comprenant au moins un filtre spectral, ledit au moins un filtre spectral (27) étant conçu et disposé de telle sorte que, lors du fonctionnement du système (1), le premier rayonnement électromagnétique (7) atteigne la première surface partielle, mais pas la deuxième surface partielle (20), et le deuxième rayonnement électromagnétique (8) atteigne la deuxième surface partielle, mais pas la première surface partielle (19).

4. Système (1) selon la revendication 3, l'élément diviseur de trajet de faisceau (27) comprenant ledit au moins un filtre spectral.

5. Système (1) selon la revendication 3 ou 4, ledit au moins un filtre spectral comprenant un premier filtre spectral (37) et un deuxième filtre spectral (38), le premier filtre spectral (37) étant disposé sur le premier trajet de faisceau (29) et le deuxième filtre spectral (38) étant disposé sur le deuxième trajet de faisceau (30), le premier filtre spectral (37) étant configuré et disposé de telle sorte que, lors du fonctionnement du système (1), le premier rayonnement électromagnétique (7) atteigne la première surface partielle, mais pas la deuxième surface partielle (20), et le deuxième filtre spectral (38) étant configuré et disposé de telle sorte que le deuxième rayonnement électromagnétique (8) atteigne la deuxième surface partielle, mais pas la première surface partielle (19).

6. Système (1) selon l'une des revendications précédentes, l'élément diviseur de trajet de faisceau (27) étant un diviseur de faisceau.

7. Système (1) selon la revendication 6, le diviseur de faisceau étant un diviseur de faisceau dichroïque.

8. Système (1) selon l'une des revendications 1 à 5, l'élément diviseur de trajet de faisceau (27) comprenant un premier élément déviateur de faisceau (33) et un deuxième élément déviateur de faisceau (34), les premier et deuxième éléments déviateurs de faisceau (33, 34) étant disposés de telle sorte qu'un plan de Fourier (35) de l'optique de détection (16) coupe les premier et deuxième éléments déviateurs de faisceau (33, 34), le premier élément déviateur de faisceau (33) étant conçu et disposé de telle sorte que, lors du fonctionnement du système (1), le premier élément déviateur de faisceau (33) dévie le rayonnement électromagnétique (28) réfléchi par la surface (2) de l'échantillon (3) dans la surface d'éclairage (12) sur le premier trajet de faisceau (29) vers la première surface partielle (19), et le deuxième élément déviateur de faisceau (34) étant conçu et disposé de telle sorte que, lors du fonctionnement du système (1), le deuxième élément déviateur de faisceau (34) dévie le rayonnement électromagnétique (28) réfléchi par la surface (2) de l'échantillon (3) dans la surface d'éclairage (12) sur le deuxième trajet de faisceau (30) vers la deuxième surface partielle (20).

9. Système (1) selon la revendication précédente, dans une direction de rayonnement, avant l'élément diviseur de trajet de faisceau (27), dans au moins un plan de coupe perpendiculaire à un axe optique (36) des premier et deuxième rayonnements électromagnétiques (7, 8) projetés par l'optique de détection (16), les premier et deuxième éléments déviateurs de faisceau (33, 34) étant à symétrie de révolution par rapport à l'axe optique (36).

10. Système (1) selon l'une des revendications précédentes, la surface de capteur (21) étant disposée à un angle différent de 90 degrés par rapport à un axe de rayonnement d'au moins du premier ou du deuxième trajet de faisceau avant la surface de capteur (21).

11. Dispositif avec un système (1) selon l'une des revendications précédentes et un dispositif de mouvement, le dispositif de mouvement étant conçu et disposé de telle sorte que, lors d'un fonctionnement du dispositif, le dispositif de mouvement déplace la surface (2) de l'échantillon (3) par rapport à la surface d'éclairage (12).

12. Procédé pour caractériser une rugosité d'une surface (2) d'un échantillon (3) avec les étapes
produire et émettre un premier rayonnement électromagnétique cohérent (7) avec une première longueur d'onde et un deuxième rayonnement électromagnétique cohérent (8) avec une deuxième longueur d'onde, la première longueur d'onde étant différente de la deuxième longueur d'onde,
éclairer exactement une surface d'éclairage (12) avec le premier rayonnement électromagnétique (7) et le deuxième rayonnement électromagnétique,
projeter sur un détecteur générateur d'image un premier motif de granularité généré par le premier rayonnement électromagnétique (7) sur la surface (2) de l'échantillon (3) dans la surface d'éclairage (12) et un deuxième motif de granularité généré par le deuxième rayonnement électromagnétique (8) sur la surface (2) de l'échantillon (3) dans la surface d'éclairage (12),
générer un premier signal d'image représentant le premier motif de granularité et un deuxième signal d'image représentant le deuxième motif de granularité, et déterminer une mesure pour une similitude entre le premier signal d'image et le deuxième signal d'image, la mesure pour la similitude caractérisant la rugosité de la surface (2),
**caractérisé en ce que**
le détecteur (17) comprend une surface de capteur (21) dans exactement un plan de capteur (22),
le premier motif de granularité est projeté sur une première surface partielle (19) de la surface de capteur (21) et le deuxième motif de granularité est projeté sur une deuxième surface partielle (20), la première et la deuxième surface partielle (20) étant différentes l'une de l'autre,
l'optique de détection (16) comprend un élément diviseur de trajet de faisceau (27), l'élément diviseur de trajet de faisceau (27) étant conçu et disposé de telle sorte que, lors du fonctionnement du système (1), l'élément diviseur de trajet de faisceau (27) répartisse du rayonnement électromagnétique (28) réfléchi par la surface (2) de l'échantillon (3) dans la surface d'éclairage (12) sur un premier trajet de faisceau (29) à la première surface partielle (19) et sur un deuxième trajet de faisceau (30) à la deuxième surface partielle (20), et
au moins un élément de compensation de longueur de trajet (32) est disposé au moins dans le premier trajet de faisceau (29) ou dans le deuxième trajet de faisceau (30), l'élément de compensation de longueur étant conçu de telle sorte qu'une première longueur optique de trajet du premier trajet de faisceau (29) et une deuxième longueur optique de trajet du deuxième trajet de faisceau optique (30) entre l'élément diviseur de trajet de faisceau (27) et la surface de capteur (21) soient la même.

13. Procédé selon la revendication 12, la surface (2) de l'échantillon d'essai étant déplacée, de préférence au moins de manière continue ou linéaire, par rapport à la surface d'éclairage (12).
